# EUROPEAN PATENT APPLICATION

(11) **EP 2 251 719 A1**
(43) Date of publication of application: **17.11.2010**
(21) Application number: 09714108.9
(22) Date of filing: 02.02.2009
(51) Int. Cl.: G02B 5/30, B32B 27/00, B32B 27/36, G01N 21/88, G02F 1/1335

(54) **RELEASE FILM**

(30) Priority: 25.02.2008 JP 2008043439; 25.02.2008 JP 2008043440
(71) Applicant: Mitsubishi Plastics, Inc., Tokyo 103-0021 (JP)
(72) Inventor: ISAKI, Kimihiro, Maibara-shi Shiga 521-0234 (JP); KUNUGIHARA, Kazuhiro, Maibara-shi Shiga 521-0234 (JP); FUJITA, Masato, Maibara-shi Shiga 521-0234 (JP)
(74) Representative: TER MEER - STEINMEISTER & PARTNER GbR
(86) International application number: PCT/JP2009/000384
(87) International publication number: WO 2009/107326

(57) **Abstract**

The present invention provides a release film comprising a polyester film which is capable of realizing a high-accuracy inspection of a polarizing plate without undergoing any of problems such as difficulty in detection of foreign matters or defects and likelihood of overlooking thereof when inspecting the polarizing plate by a Cross-Nicol method. The present invention relates to (i) a release film for a polarizing plate which comprises a polyester film and a release layer formed on one surface of the polyester film by a coating/stretching method, wherein a haze of the release film is 7 to 18%, and an L value of the release film is not more than 77 as measured form a side of the release layer by a reflection method; and (ii) a release film for a polarizing plate, comprising a polyester film and a release layer formed on one surface of the polyester film by a coating stretching method, wherein a surface roughness (Ra) of the release film is 11 to 25 nm, and an image clarity value of the release film is not less than 90%.

## Description

### TECHNICAL FIELD

The present invention relates to a release film used in application fields such as liquid crystal displays, in particular, suitably used for a polarizing plate, which has excellent optical properties and is capable of detecting defects in a film with a high accuracy upon an inspection step thereof.

### BACKGROUND ART

Polyester films typically comprising polyethylene terephthalate or polyethylene naphthalate have been extensively used in various applications because of excellent properties such as mechanical strength, dimensional stability, flatness, heat resistance, chemical resistance and optical properties as well as excellent cost performance. However, with a recent tendency that the polyester films are processed and used under various conditions owing to the increase in their application fields, when the films are used in a release film for a polarizing plate, there tends to arise such a problem that an inspection accuracy of the polarizing plate upon inspection for detection of foreign matters therein tends to be sometimes deteriorated by formation of luminescent spots due to particulate components in the polyester film constituting the release film, etc.

With the recent rapid spread of mobile phones and personal computers, there is remarkably caused an increasing demand for liquid crystal displays (hereinafter referred to merely as "LCD") which are capable of realizing reduction in thickness and weight, low power consumption and high image quality as compared to CRT as displays of a conventional type. Also, the progress of techniques for enlarging an image screen of LCD also becomes remarkable. The LCD having a large image screen has been recently used, for example, in large TVs having a size of 30 inches or more. In the LCD having such a large image screen, in many cases, a brightness of a backlight incorporated into the LCD unit is enhanced, or a film capable of improving a brightness of LCD is incorporated into the LCD unit to obtain the LCD having both a large image screen and an improved visibility.

In the LCD of a high-brightness type, small luminescent spots being present in the display tend to frequently cause significant problems. In constitutional members incorporated in the high-brightness type LCD such as a polarizing plate, a retardation plate (phase difference plate) and a retarded polarizing plate, even fine foreign matters causing no problem in the conventional low-brightness type LCD tend to become problematic. Therefore, it has been required to not only prevent foreign matters from being included into the LCD during the production process, but also further improve an inspection accuracy therefor so as to surely detect defects owing to the foreign matters included therein even when inclusion of the foreign matters occurs unexpectedly.

Hitherto, particles have been usually incorporated into the polyester film to ensure a good slip property and a good winding property of the film. In this case, if the particles do not have an appropriate particle size and are not blended in an adequate amount, the resulting polyester film may hardly exhibit a desired slip property and therefore tends to be deteriorated in winding property, resulting in poor productivity of the film. However, as described above, in the case where the particles have an ordinary particle size and are blended in an ordinary amount, there tends to occur such a problem that when the polyester film is used in a release film for a polarizing plate, an inspection accuracy of the polarizing plate is deteriorated owing to luminescent spots formed by the particles added to the polyester film upon subjecting the polarizing plate to an inspection step for detection of foreign matters therein.

For example, the inspection for detection of defects in the polarizing plate is generally carried out by visual inspection using a Cross-Nicol method. In one example of such an inspection, the polarizing plate used for large TVs having a size of 40 inches or more has been inspected by an automatic foreign matter inspection apparatus using a Cross-Nicol method. The Cross-Nicol method is carried out in such a manner in which two polarizing plates are disposed such that orientation main axes thereof are perpendicular to each other to keep them in a quenching state, and when any foreign matters or defects are present, luminescent spots appear at the positions, thereby enabling visual inspection for detection of the defects therein. In this case, the respective polarizing plates are usually provided with an adhesive layer on which a polyester film with a release layer as a release film is laminated. When inspecting the product having the above structure, the Cross-Nicol inspection is carried out under such a condition that the release polyester film is sandwiched between the two polarizing plates. However, in general, when the release polyester film is used as described above, foreign matters or defects in the polarizing plate tend to be hardly detected by the inspection using the Cross-Nicol method, thereby causing such a problem that the foreign matters or defects are likely to be overlooked.

In consequence, there have been proposed a laminate having a laminated structure including an adhesive layer provided on one surface of a polarizing plate, a retarded polarizing plate or a retardation plate, and a release film laminated on a surface of the adhesive layer, which has an excellent polarization characteristics and readily undergoes a visual foreign matter inspection, as well as a release film used therefor (refer to Patent Document 1). More specifically, the laminate and the release film are as follows.

### <Laminate having improved polarization characteristics>

A laminate having improved polarization characteristics, in which an adhesive layer is formed on one surface of a polarizing plate, a retarded polarizing plate or a retardation plate and a release film having a transparent biaxially oriented aromatic polyester film as a base film is formed on a surface of the adhesive layer, wherein the laminate is configured such that (1) a direction of an orientation main axis of the biaxially oriented aromatic polyester film in the release film as measured by a microwave transmission-type molecular orientation meter, and (2) a direction of an orientation axis of the polarizing plate, the retarded polarizing plate or the retardation plate are substantially the same or substantially form an angle of 90°.

### <Release film>

A release film for inspection of a polarizing plate, a retarded polarizing plate or a retardation plate, which release film consists essentially of a transparent biaxially oriented aromatic polyester base film at least one surface of which is coated with a silicone resin to impart a releasing property thereto, wherein the biaxially oriented aromatic polyester film has a MOR value of 1.3 to 1.8 as measured by a microwave transmission type molecular orientation meter. In addition, according to the preferred embodiment of the release film, a difference between a maximum value and a minimum value of the MOR value in the biaxially oriented aromatic polyester film is 0.2 or less, and a retardation (R) value of the biaxially oriented polyester film which is defined by the specific formula is at least 1,200 (nm).

However, even when using the above conventional methods for inspecting recent products of such a level as required to have a high quality, the inspection accuracy tends to be still unsatisfactory to carry out the inspection for surely detecting defects. In addition, in the case where the polarizing plate is inspected to detect defects thereof such as distortion and unevenness, the inspection may be sometimes carried out by reflection visual inspection method under a fluorescent lamp. In this case, the polarizing plate is inspected through a release film overlaid on the polarizing plate. Therefore, if the release film is extremely white, the defects of the polarizing plate tend to be hardly seen therethrough, thereby causing such a problem that these defects are likely to be overlooked.
Patent Document 1: Japanese Patent Application Laid-Open (KOKAI) No. 7-101026

### DISCLOSURE OF THE INVENTION

### Problems to be Solved by the Invention

The present invention has been made to solve the above problems. An object of the present invention is to provide a release film constituted of a polyester film which is capable of realizing inspection of a polarizing plate with a high accuracy when the polarizing plate is inspected by a Cross-Nicol method.

### Means for Solving Problems

As a result of the present inventors' earnest study in view of the above problems, it has been found that the release film formed from a polyester film having specific properties is suitably used as a release film for a polarizing plate, without any damage to its excellent film properties thereof. The present invention has been attained on the basis of this finding. The present invention includes a group of inventions, and the aspects of the respective inventions are as follows.

That is, in a first aspect of the present invention, there is provided a release film for a polarizing plate which comprises polyester film and a release layer formed on one surface of the polyester film by a coating/stretching method, has a haze of 7 to 18%, and has an L value of not more than 77 as measured form a side of the release layer by a reflection method.

In a second aspect of the present invention, there is provided a release film for a polarizing plate, which comprises a polyester film and a release layer formed on one surface of the polyester film by a coating/stretching method, has a surface roughness (Ra) of 11 to 25 nm, and has an image clarity value of not less than 90%.

### EFFECT OF THE INVENTION

In accordance with the present invention, there is provided a release film used for a polarizing plate which can be minimized in number of luminescent spots formed therein, and enhanced in inspection accuracy for detection of foreign matters included in the polarizing plate. Therefore, the present invention has a high industrial value.

### PREFERRED EMBODIMENTS FOR CARRYING OUT THE INVENTION

The present invention is described in detail below.
The polyester film described in the present invention is in the form of a film obtained by cooling a molten polyester sheet melt-extruded from an extrusion mouth by a so-called extrusion method, if required, followed by subjecting the sheet to stretching and heat treatments.

A polyester constituting the film of the present invention is obtained by polycondensing an aromatic dicarboxylic acid with an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexane dimethanol. Typical examples of the polyester include polyethylene terephthalate (PET) and polyethylene-2,6-naphthalenedicarboxylate (PEN). The polyester used herein may be in the form of either a homopolyester or a copolyester. The copolyester may be in the form of a copolymer comprising a third component in an amount of not more than 30 mol%. Examples of the dicarboxylic acid component of such a copolyester include one kind or two or more kinds of acids selected from the group consisting of isophthalic acid, phthalic acid, terephthalic acid, 2,6-naphthalenedicarboxylic acid, adipic acid, sebacic acid and oxycarboxylic acids such as p-oxybenzoic acid. Examples of the glycol component of the copolyester include one kind or two or more kinds of glycols selected from the group consisting of ethylene glycol, diethylene glycol, propylene glycol, butanediol, 1,4-cyclohexane dimethanol and neopentyl glycol.

The polyester obtained in the present invention may also comprise a weather-resisting agent, a light-resisting agent, an antistatic agent, a lubricant, a light-shielding agent, an antioxidant, a fluorescent brightener, a matting agent, a heat stabilizer and a colorant such as dyes and pigments unless the addition thereof adversely affects the aimed effects of the present invention.

Examples of the particles which may be incorporated in the film include particles of silicon oxide, alumina, calcium carbonate, kaolin and titanium oxide as well as crosslinked polymer fine particles as described in Japanese Patent Publication (KOKOKU) No. 59-5216. These particles may be used alone or in combination of any two or more kinds thereof. The content of the particles in the film layer to which the particles are added is usually not more than 1% by weight, preferably 0.01 to 1% by weight and more preferably 0.02 to 0.6% by weight. When the content of the particles in the film is too small, the resulting film tends to have an extremely flat surface, which results in such a tendency that the film suffers from flaws on its surface or is deteriorated in winding property during the production process thereof. On the other hand, when the content of the particles in the film is more than 1% by weight, the resulting film tends to have an excessively roughened surface, resulting in poor transparency of the film.

The particles incorporated in the polyester film have an average particle diameter of usually 0.02 to 2 µm, preferably 0.1 to 1.8 µm and more preferably 0.2 to 1.6 µm. When the average particle diameter of the particles incorporated in the polyester film is less than 0.02 µm, the resulting film tends to have an extremely flat surface, which results in such a tendency that the film is deteriorated in winding property during the production process thereof. When the average particle diameter of the particles incorporated in the polyester film is more than 5 µm, the particles tend to form luminescent spots when the polyester film is used in a release film for a polarizing plate, so that the inspection for detection of foreign matters therein may be undesirably impaired.

On the other hand, in the case of a laminated film having two or more layers, in order to improve a transparency of the film, the particles are preferably incorporated in only a surface layer thereof. In this case, the surface layer means at least one of front and rear surface layers. The particles may also be incorporated in both of the front and rear surface layers.

In the present invention, in order to improve an inspection accuracy during the process of producing a polarizing plate, in particular, during the inspection step, the haze and the reflection L value of the film is required to satisfy the above specified ranges. From these viewpoints, the particles to be incorporated in the polyester are preferably calcium carbonate particles.

In the present invention, the method for incorporating the particles into the polyester is not particularly limited, and there may be adopted any conventionally known methods. For example, the particles may be added at any optional stage of the process for producing the polyester. The particles may be added in the form of a slurry prepared by dispersing the particles in ethylene glycol, etc., preferably either at the stage of esterification or at the stage after completion of transesterification reaction and before initiation of polycondensation reaction to then allow the polycondensation reaction to proceed. Alternatively, the particles may be incorporated in the polyester by the method of blending a slurry prepared by dispersing the particles in ethylene glycol or water with a polyester raw material using a vented kneading extruder, the method of blending the dried particles with the polyester raw material using a kneading extruder, or the like.

Meanwhile, the polyester obtained after the melt polymerization may be crushed into chips, and further subjected to solid state polymerization under reduced pressure while heating or in a flow of an inert gas such as nitrogen, if required. The thus obtained polyester preferably has an intrinsic viscosity of not less than 0.40 dL/g and more preferably 0.40 to 0.90 dL/g.

In the present invention, the polyester film may have such a laminated structure in which the polyester having a less content of oligomers is co-extruded and laminated on at least one surface of a polyester layer having an ordinary oligomer content. The polyester film used for the release film according to the present invention especially preferably has the above laminated structure, because the effect of suppressing formation of luminescent spots due to precipitation of the oligomers in the film can be attained.

In the polyester film used in the present invention, the change in orientation angle in the film is preferably not more than 3°/500 mm and more preferably not more than 2°/500 mm as measured by the method described in the Examples below. When the change in orientation angle in the film is more than 3°/500 mm, the intensity of a transmitted light used for the inspection of the polarizing plate tends to vary depending upon positions on the polarizing plate, so that the stable inspection for the polarizing plate may be undesirably impaired.

The total thickness of the film according to the present invention is not particularly limited as long as the film can be still suitably formed, and is usually 6 to 125 µm and preferably 9 to 75 µm.

### <Invention concerning the first aspect>

In the present invention, the film is required to have a haze of 7 to 18%. The haze of the film is preferably 9 to 15%. When the haze of the film is less than 7%, since the amount of the particles which can be incorporated therein is reduced, the surface of the resulting film tends to be extremely flat, thereby causing such a tendency that the film is deteriorated in winding property during the production process thereof. When the haze of the film is more than 18%, the resulting film when used as a release film for a polarizing plate tends to suffer from whitely turbid visual field upon subjected to inspection by transmitted light, so that the inspection therefor may be undesirably impaired.

The polyester film constituting the release film of the present invention is required to surely maintain a higher inspection suitability for the purpose of improving an inspection accuracy during the inspection step. In particular, in the present invention, as an index for contemplating to prevent deterioration in inspection accuracy due to reflection of light on the film, there is adopted a reflection L value. That is, the film is required to have a reflection L value of not more than 77. The reflection L value of the film is preferably not more than 75. When the reflection L value of the film is more than 77, a reflection light from a polarizing plate with the film tends to be too strong upon inspection of the polarizing plate using the reflection light, so that the inspection therefor may be undesirably impaired.

### <Invention concerning the second aspect>

In the present invention, the film is required to have an image clarity value of not less than 90% as measured by the method described in Examples below. When the image clarity value of the film is less than 90%, the resulting film when used as a release film for a polarizing plate tends to suffer from distortion of images upon inspection for detection of defects in the polarizing plate using a transmitted light, so that the visual inspection or automatic inspection therefor may be undesirably impaired.

Also, the film is required to have a surface roughness (Ra) of 11 to 25 nm. The surface roughness (Ra) of the film is preferably 11 to 22 nm. When the surface roughness (Ra) of the film is more than 25 nm, the resulting film tends to be deteriorated in surface flatness and tends to be tinted whitely, so that the inspection for the polarizing plate tends to be undesirably impaired. On the other hand, when he surface roughness (Ra) of the film is less than 11 nm, the resulting film tends to be extremely flat, thereby causing such a tendency that the film is deteriorated in winding property during the production process thereof.

Next, the process for producing the film according to the present invention is explained in detail below. However, the following production process is only illustrative and not intended to limit the scope of the present invention,
and the other production processes are also applicable as long as they satisfy the aspects of the present invention.

First, the preferred example of the process for producing a polyester used in the present invention is explained below. In the below-exemplified production process, although polyethylene terephthalate is used as the polyester, it should be noted that the production conditions may be appropriately determined according to kind of polyester used. According to an ordinary method, terephthalic acid is esterified with ethylene glycol, or dimethyl terephthalate is transesterified with ethylene glycol, thereby obtaining an ester reaction product. Next, the thus obtained reaction product is transferred to a polymerization vessel, heated therein while reducing a pressure, and finally heated under vacuum to 280°C to conduct a polymerization reaction thereof, thereby obtaining the aimed polyester.

The intrinsic viscosity of the polyester used in the present invention is in the range of usually 0.40 to 0.90, preferably 0.45 to 0.80 and more preferably 0.50 to 0.70. When the intrinsic viscosity of the polyester is less than 0.40, the resulting film tends to be deteriorated in mechanical strength. When the intrinsic viscosity of the polyester is more than 0.90, there tend to arise the problems such as excessively high melt viscosity, high load applied to an extruder and high product costs.

Next, polyester chips produced by drying the above obtained polyester by any known methods are fed to a melting extruder and heated to a temperature not lower than a melting point of the polymer to thereby melt the polyester chips. Next, the thus obtained molten polymer is extruded through a die on a rotary cooling drum, and rapidly cooled to a temperature not higher than a glass transition temperature thereof and then solidified thereon, thereby obtaining a substantially amorphous non-oriented sheet. In this case, in order to enhance a flatness of the sheet, it is preferred to enhance adhesion between the sheet and the rotary cooling drum. For this purpose, in the present invention, an electrostatic adhesion method and/or a liquid coating adhesion method are preferably used. In the present invention, the thus obtained sheet is biaxially stretched to form a stretched film. More specifically, the stretching procedure may be conducted under the following conditions. That is, the unstretched sheet is stretched in a longitudinal direction thereof at a temperature of 70 to 145°C at a stretch ratio of 2 to 6 times to form a longitudinally monoaxially stretched film, and then the monoaxially stretched film is stretched in a lateral direction thereof at a temperature of 90 to 160°C at a stretch ratio of 2 to 6 times to form a biaxially stretched film. The resulting biaxially stretched film is preferably further heat-treated at a temperature of 150 to 240°C for 1 to 600 sec. Further, upon the heat treatment, in the maximum heat-treating temperature zone and/or a cooling zone located at an outlet of the heat treatment, the film is preferably subjected to relaxation by 0.1 to 20% in a longitudinal direction and/or a lateral direction thereof.
In addition, if required, the thus obtained film may be subjected again to longitudinal and lateral re-stretching steps. Further, the unstretched sheet may be subjected to simultaneous biaxial stretching at an area ratio of 10 to 40 times.

Next, the method of forming the release layer which may be used in the present invention is explained.

As the required properties of the release film according to the present invention, there may be mentioned a good flatness of the surface of the film for the purpose of suppressing occurrence of wrinkles upon heating. In addition, when applied to liquid crystal displays, with the tendency of increase in size of an image screen thereof, it is required to further enhance a collection efficiency of the image screen. For this reason, it is now required that the release film has a still larger width.

In order to satisfy the above required properties at the same time, upon production of the release film according to the present invention, it is essentially required that the release layer is provided on the polyester film by a coating/stretching (in-line coating) method.

The coating/stretching (in-line coating) method may be carried out in the following manner although not particularly limited thereto. For example, in the sequential biaxial stretching, the coating treatment may be carried out after completion of the first stage stretching but before initiation of the second stage stretching. In the case where the release layer is formed on the polyester film by the coating/stretching method, it is possible to not only conduct the coating treatment simultaneously with the stretching, but also reduce the thickness of the resulting release layer by suitably controlling the stretch ratio thereof, thereby enabling production of a suitable film as the polyester film.

In addition, the release layer constituting the release film of the present invention preferably comprises a curable silicone resin of an emulsion type to impart a good releasing property thereto. The release layer may comprises the curable silicone resin of an emulsion type as a main component. Alternatively, a modified silicone type resin obtained by graft-polymerizing the silicone resin with an organic resin such as urethane resins, epoxy resins and alkyd resins, etc., may also be used instead unless the use thereof adversely affect the aimed effects of the present invention.

Specific examples of the curable silicone resin of an emulsion type include "Dehesive 430" and "Dehesive 440" both produced by Wacker Asahi Kasei Silicone Co., Ltd., "Silicolease 902" produced by Arakawa Chemical Industries, Ltd., or the like.

In the present invention, the release layer may be provided on the polyester film by any conventionally known coating methods such as a reverse gravure coating method, a direct gravure coating method, a roll coating method, a die coating method, a bar coating method and a curtain coating method. These coating methods are described, for example, in HARAZAKI, Yuji, "Coating Method", Maki-Shoten, 1979.

In the present invention, the curing conditions used upon forming the release layer on the polyester film are not particularly limited. For example, in the case where the release layer is provided by a coating/stretching (in-line coating) method, the heat treatment therein may be conducted usually at a temperature of about 170 to 280°C for about 3 to 40 sec and preferably at a temperature of about 200 to 280°C for about 3 to 40 sec. Whether the release layer is formed by a coating/stretching (in-line coating) method or an off-line coating method, the heat treatment may be carried out, if required, in combination with irradiation of activation energy radiation such as ultraviolet radiation. Meanwhile, as an energy source of the activation energy radiation for curing the resin applied, there may be used conventionally known devices and energy sources.

From the viewpoint of a good coating property, the coating amount of the release layer is usually in the range of 0.005 to 0.5 g/m² and preferably 0.005 to 0.2 g/m². When the coating amount of the release layer is less than 0.005 g/m², it may be difficult to obtain a uniform coating film owing to lack of a stability of the coating property. On the other hand, when the coating amount of the release layer is more than 0.5 g/m², i.e., when the thickness of the coating layer is excessively large, the resulting release layer itself tends to be deteriorated in adhesion of the coating film, curability, etc.

In addition, the polyester film constituting the release film may be previously subjected to surface treatments such as corona discharge treatment and plasma treatment.

The peel force (F) of the release film of the present invention is preferably in the range of 20 to 200 mN/cm and more preferably 20 to 100 mN/cm. When the peel force (F) of the release film is less than 20 mN/cm, since the peel force becomes excessively low, there tends to arise such a problem that the release film readily suffers from peeling at an undesirable earlier stage. On the other hand, when the peel force (F) of the release film is more than 200 mN/cm, since the peel force becomes excessively heavy, there tend to arise the problems such as deformation of an adhesive applied onto the release film and deposition of the adhesive on the release film when the release film is peeled off.

Further, the release film of the present invention may also be provided on its surface opposite to the release layer-forming surface, with a coating layer such as an adhesive layer, an antistatic layer and an oligomer deposition preventive layer, unless the thus formed coating layer adversely affects the aimed effects of the present invention.

### EXAMPLES

The present invention is described in more detail below by the following Examples. However, these Examples are only illustrative and not intended to limit the present invention thereto, and they are involved in the scope of the present invention unless departing from the subject matters of the present invention. Meanwhile, the term "part(s)" used in the following Examples and Comparative Examples represents "part(s) by weight". Further, various properties used in the present invention were measured by the following methods.

### (1) Measurement of intrinsic viscosity of polyester:

One gram of a polyester was accurately weighed, and mixed with and dissolved in 100 mL of a mixed solvent comprising phenol and tetrachloroethane at a weight ratio of 50:50, and a viscosity of the resulting solution was measured at 30°C.

### (2) Average particle size (d50):

Using a centrifugal precipitation type particle size distribution measuring apparatus "SA-CP3 Model" manufactured by Shimadzu Seisakusho Corp., the particle size corresponding to a cumulative volume fraction of 50% in equivalent spherical distribution of the particles was measured as an average particle size d50.

### (3) Measurement of change in orientation angle in film (°/500 mm):

The polyester film was cut into sample films at its positions located every 500 mm from a center of the film towards opposite ends thereof along a width direction of the polyester film as well as at the opposite end positions, and orientation angles of the respective sample films were measured using an automatic birefringence meter "KOBRA-21ADH" manufactured by Oji Keiki Co., Ltd., to determine a change in orientation angle of the film every 500 mm along a width direction thereof. Meanwhile, when calculating the change in orientation angle at the positions including the opposite end positions thereof, if the distance of the sampling position from the adjacent sampling position was less than 500 mm, the change in orientation angle at such a position was calculated by proportional calculation method, and the calculated value is regarded as the change in orientation angle every 500 mm at that position. Next, the polyester film was cut in a length direction thereof to obtain a film having a length of 3 m. Then, sample films were cut from the resulting film at its total seven positions located every 500 mm as a distance from a center of the film in a width direction thereof along a length direction of the film (including opposite end positions) to determine an orientation angle of each position. Thus, the change in orientation angle every 500 mm in both the width and length directions of the polyester film was measured, and the maximum value of the change in orientation angle was regarded as the change in orientation angle of the polyester film. Upon the measurement, it is important that the orientation angles of all of the sample films were measured on the basis of the same reference axis, and the reference axis may be optionally determined.

### (4) Measurement of reflection L value:

Using a sample film, the L value thereof was measured by a reflection method according to JIS Z-8722 using a spectrophotometric colorimeter "SE-2000 Model" manufactured by Nippon Denshoku Kogyo Co., Ltd.

### (5) Measurement of haze of film:

The haze of a sample film was measured using an integrating sphere turbidity meter "NDH-20D" manufactured by Nippon Denshoku Kogyo Co., Ltd., according to JIS K7105.

### (6) Measurement of image clarity value:

The image clarity value of a film was measured by a transmission method according to JIS K7105 using an image clarity measuring apparatus "ICM-1" manufactured by Suga Test Instruments Co., Ltd. Meanwhile, the image clarity value was the value read out at 0.125 mm from those measured by an optical comb filter.

### (7) Measurement of Ra:

Using a surface roughness meter "SE3500 Model" manufactured by Kosaka Laboratory Ltd., the surface roughness of a film was measured according to JIS B0601-1994. Meanwhile, the measuring length was 2.5 mm.

### (9) Visual inspection property under reflected light:

Under the condition using a reflected light from a fluorescent lamp, a polarizing plate attached with the release film was visually observed by 10 inspectors to evaluate a visual inspection property of the film under the reflected light according to the following evaluation criteria. Meanwhile, upon the above measurement, the sample film with A4 size was cut from a position of the resulting release film corresponding to 50% of the width of the release film as measured from an end of the film along the width direction, and subjected to the above measurement.

### <Evaluation criteria >

○: Very good inspection property (all of the inspectors were evaluated as being good; acceptable level without practical problems)
Δ: Slightly poor inspection property (two or less inspectors among the 10 inspectors were evaluated as being poor; in some cases, it might be unacceptable level with practical problems)
×: Poor inspection property (all of the 10 inspectors were evaluated as being poor; unacceptable level with practical problems)

### (9) Recognizability of foreign matters under Cross-Nicol:

When producing the polarizing plate attached with the release film, black metal particles (foreign matters) each having a size of not less than 50 µm were included between the adhesive and the polarizing film in an amount of 50 particles per m². On the release film of the thus formed polarizing plate in which the foreign matters were included, another polarizing plate for inspection was overlapped such that the width direction of the release film was perpendicular to an orientation axis of the polarizing plate for inspection. White light was irradiated from the side of the first polarizing plate, and the resulting laminate was visually observed by 10 inspectors from the side of the polarizing plate for inspection to examine whether or not the foreign matters included between the adhesive and the polarizing film were recognizable, and evaluate the observation results according to the following classification ratings. Meanwhile, upon the measurement, the evaluation of the resulting film was carried out on the basis of the value measured at a center position of the film.

### <Evaluation criteria >

○: Very good recognizability of foreign matters (all of the inspectors were evaluated as being good; acceptable level without practical problems)
Δ: Slightly poor recognizability of foreign matters (two or less inspectors among the 10 inspectors were evaluated as being poor; in some cases, it might be unacceptable level with practical problems)
×: Poor recognizability of foreign matters (all of the 10 inspectors were evaluated as being poor; unacceptable level with practical problems)

### (10) Evaluation of peel force (F) of release film:

One surface of a double coated adhesive tape ("No. 502" produced by Nitto Denko Corp.) was attached to the surface of the release layer of the sample film, and the resulting laminated film was cut into a size of 50 mm x 300 mm. The thus obtained cut film was allowed to stand at room temperature for 1 hr and then subjected to measurement of a peel force thereof. Upon the measurement of the peel force, the film was subjected to 180° peel test at a pulling rate of 300 mm/min using a tensile tester ("INTESCO MODEL 2001 Type" produced by Intesco Co., Ltd.).

### (11) Releasing property:

The condition of the polarizing plate attached with the release film when peeling the release film therefrom was observed to evaluate a releasing property thereof.

### <Classification ratings for releasing property>

○: The release film was smoothly peeled off without any adhesion of the adhesive to the release layer.
Δ: The release film was peeled off, but when peeled at a high rate, adhesion of the adhesive to the release layer occurred.
×: Significant adhesion of the adhesive to the release film occurred.

Among the above classification ratings, the levels of ○ and Δ are acceptable and usable without practical problems.

### (12) Evaluation of flatness of release film:

The sample film was suspended on a wall to visually observe a flatness of the film under irradiation of light from a fluorescent lamp. The results are evaluated according to the following evaluation criteria.

### <Evaluation criteria >

○: No wrinkles due to heating were recognized even when the film was observed at an inclined angle of 45° relative to the surface of the film (acceptable level without practical problems).
Δ: Wrinkles due to heating were recognized when the film was directly observed from a front side of the film (unacceptable level with practical problems).

### (13) Total evaluation:

The sample film was totally evaluated according to the following evaluation criteria.

### <Evaluation criteria >

○: All of the evaluation items including a visual inspection property, a recognizability of foreign matters, a releasing property and a flatness were rated with the level "○".
Δ: At least one of the evaluation items including a visual inspection property, a recognizability of foreign matters, a releasing property and a flatness was rated with the level "Δ".
×: At least one of the evaluation items including a visual inspection property, a recognizability of foreign matters, a releasing property and a flatness was rated with the level "×".

### <Production of polyester (A)>

100 parts by weight of dimethyl terephthalate and 60 parts by weight of ethylene glycol as starting materials were charged together with magnesium acetate tetrahydrate as a catalyst into a reactor, and the reaction therebetween was initiated at 150°C. The reaction temperature was gradually raised while distilling off methanol produced, and allowed to reach 230°C after 3 hr. After 4 hr, the
transesterification reaction was substantially terminated. The obtained reaction mixture was mixed with ethyl acid phosphate and then transferred to a polycondensation reaction vessel. Further, the reaction mixture thus transferred was mixed with 0.04 part of antimony trioxide, followed by subjecting the mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, the reaction was terminated at the time at which a viscosity of the reaction solution reached the value corresponding to an intrinsic viscosity of 0.63, which was determined by the change in agitation power in the reaction vessel. The resulting polymer was discharged under application of a nitrogen pressure from the reaction vessel, thereby obtaining chips of a polyester (A). As a result, it was confirmed that the thus obtained polyester (A) had an intrinsic viscosity of 0.63.

### <Production of polyester (B)>

The same procedure as defined in the above production of the polyester (A) was conducted except that after adding ethyl acid phosphate, an ethylene glycol slurry of synthetic calcium carbonate particles having an average particle diameter of 0.8 µm was added to the resulting mixture such that the content of the synthetic calcium carbonate particles based on the polyester was 1% by weight, thereby obtaining a polyester (B). As a result, it was confirmed that the thus obtained polyester (B) had an intrinsic viscosity of 0.63.

### <Production of polyester (C)>

The same procedure as defined in the above production of the polyester (B) was conducted except that the particles added were replaced with synthetic calcium carbonate particles having an average particle diameter of 1.5 µm such that the content of the synthetic calcium carbonate particles based on the polyester was 1% by weight, thereby obtaining a polyester (C). As a result, it was confirmed that the thus obtained polyester (C) had an intrinsic viscosity of 0.63.

### <Production of polyester (D)>

The same procedure as defined in the above production of the polyester (B) was conducted except that the particles added were replaced with silica particles having an average particle diameter of 2.2 µm such that the content of the silica particles based on the polyester was 0.6% by weight, thereby obtaining a polyester (D). As a result, it was confirmed that the thus obtained polyester (D) had an intrinsic viscosity of 0.63.

### <Production of film>

Examples 1a to 7a and Comparative Examples 1a to 3a; and Examples 1b to 7b and Comparative Examples 1b to 3b:
(The sign "a" indicates that the Examples and the Comparative Examples relate to the invention concerning the first aspect of the present invention, whereas the sign "b" indicates that the Examples and the Comparative Examples relate to the invention concerning the second aspect of the present invention)

Mixed raw materials obtained by mixing the polyester chips (A) with the polyester chips (B) to (D) at the mixing ratios shown below in Tables 1 to 4 were respectively charged as a raw material for outermost layers (surface layers) and a raw material for an intermediate layer into two extruders, and melt-extruded at 290°C therefrom, and then cooled and solidified on a cooling roll whose surface was controlled to a temperature of 40°C, by an electrostatic adhesion method, thereby obtaining an unstretched sheet. Next, the thus obtained unstretched sheet was stretched at 100°C at a stretch ratio of 2.8 times in a longitudinal direction thereof, and then coated with a releasing agent having the below-mentioned composition such that the coating amount of the releasing agent was 0.060 g/m² (after dried). Thereafter, the resulting sheet was introduced into a tenter where the sheet was preheated and then stretched at 120°C at a stretch ratio of 4.9 times in a lateral direction thereof. Then, the obtained stretched sheet was heat-treated at 190°C for 10 sec, and then relaxed by 10% in a width direction thereof at 180°C, thereby obtaining polyester films each having a width of 3000 mm. As a result, it was confirmed that the thus obtained respective polyester films had a total thickness of 38 µm, and the thicknesses of the respective layers therein were 4 µm, 30 µm and 4 µm.

Meanwhile, the films obtained after the stretching and heat treatment in Comparative Examples 1a and 1b were hardly wound up into a roll owing to an excessively flat surface shape and deteriorated slip property thereof, and further suffered from flaws over a whole surface thereof. As a result, the films of Comparative Examples 1a and 1b were unacceptable as a commercial product.

### <Production of release film>

The films other than those obtained in Comparative Examples 1a and 5a and Comparative Examples 1b and 4b were each coated with a releasing agent having any of the following compositions A to C

### (Releasing agent composition A)

| | |
|---|---|
| Curable silicone resin ("Dehesive 430" produced by Wacker Asahi Kasei Silicone Co., Ltd.) | 50% by weight |
| Curable silicone resin ("Dehesive 440" produced by Wacker Asahi Kasei Silicone Co., Ltd.) | 50% by weight |

| | |
|---|---|
| (A mixture of these resins was diluted with water to prepare a coating solution having a solid concentration of 5% by weight.) | |

### (Releasing agent composition B)

| | |
|---|---|
| Curable silicone resin ("Silicolease 902" produced by Arakawa Chemical Industries, Ltd.) | 99% by weight |
| Platinum catalyst ("Silicolease 903" produced by Arakawa Chemical Industries, Ltd.) | 1% by weight |

| | |
|---|---|
| (A mixture of these components was diluted with water to prepare a coating solution having a solid concentration of 5% by weight.) | |

### (Releasing agent composition C)

| | |
|---|---|
| Curable silicone resin ("Dehesive 430" produced by Wacker Asahi Kasei Silicone Co., Ltd.) | 30% by weight |
| Curable silicone resin ("Dehesive 440" produced by Wacker Asahi Kasei Silicone Co., Ltd.) | 30% by weight |
| Release modifier ("CRA491" produced by Wacker Asahi Kasei Silicone Co., Ltd.) | 40% by weight |

| | |
|---|---|
| (A mixture of these components was diluted with water to prepare a coating solution having a solid concentration of 5% by weight.) | |

### Comparative Examples 4a and 4b:

The same procedure as defined in each of Examples 1a and 1b was conducted except that the film was coated not with the above releasing agent by a coating/stretching method, but with a releasing agent having the following composition in an off-line manner by a reverse gravure coating method such that the coating amount of the release agent was 0.1 g/m² (after dried), and the resulting coated film was heat-treated by a dryer set to a temperature of 180°C for 5 sec, thereby obtaining a release film in the form of a roll.

### (Releasing agent composition D)

| | |
|---|---|
| Curable silicone resin ("KS-774" produced by Shin-Etsu Chemical Co., Ltd.) | 100 parts |
| Curing agent ("PL-4" produced by Shin-Etsu Chemical Co., Ltd.) | 10 parts |
| Mixed solvent of MEK and toluene (mixing ratio: 1:1) | 1500 parts |

### <Production of polarizing plate attached with release film>

The below-mentioned acrylic adhesive was applied onto a polarizing film such that the thickness of the adhesive applied was 25 µm (after dried). The resulting material was passed through a drying oven at 130°C for 30 min, and then a release film was laminated thereonto, thereby producing a polarizing plate with the release film in which the release film was adhered to the polarizing film through the adhesive.
The release film was laminated on the polarizing film such that the width direction of the release film was in parallel with an orientation axis of the polarizing film.

### (Coating solution of acrylic adhesive)

| | |
|---|---|
| Acrylic adhesive ("Oribain" produced by Toyo Ink Mfg. Co., Ltd.) | 100 parts |
| Curing agent ("BPS8515" produced by Toyo Ink Mfg. Co., Ltd.) | 3 parts |
| Mixed solvent of methyl ethyl ketone and toluene (mixing ratio: 1:1) | 50 parts |

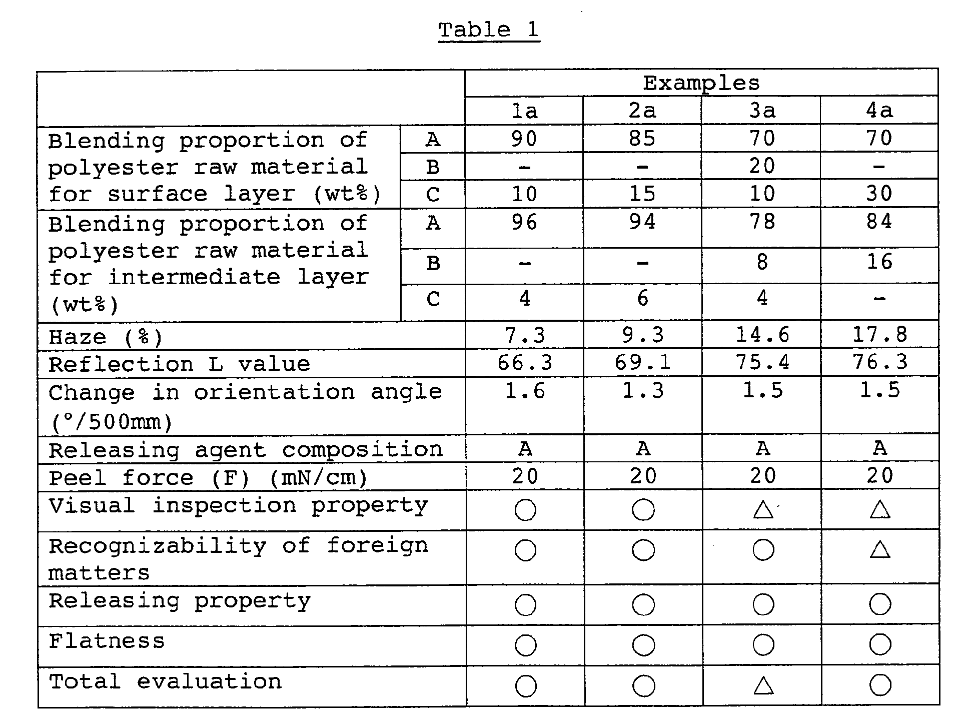

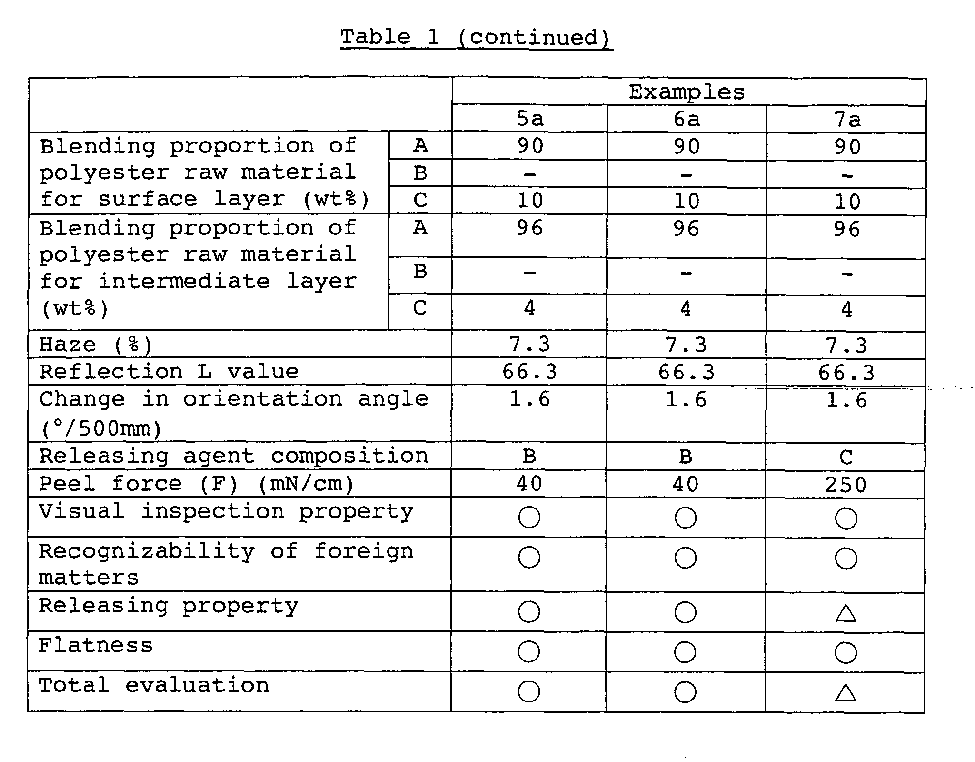

**Table 2**

| | | Comparative Examples | | | |
|---|---|---|---|---|---|
| | | 1a | 2a | 3a | 4a |
| Blending proportion of polyester raw material for surface layer (wt%) | A | 92 | 60 | 60 | 90 |
| | B | - | 40 | 40 | - |
| | C | 8 | - | - | 10 |
| Blending proportion of polyester raw material for intermediate layer (wt%) | A | 97 | 90 | 84 | 96 |
| | B | - | 10 | 16 | - |
| | C | 3 | - | - | 4 |
| Haze (%) | | 5.8 | 14.6 | 19.0 | 7.3 |
| Reflection L value | | 64.4 | 78.5 | 80.4 | 66.3 |
| Change in orientation angle (°/500mm) | | 1.4 | 1.5 | 1.3 | 1.6 |
| Releasing agent composition | | - | A | A | D |
| Peel force (F) (mN/cm) | | - | 20 | 20 | 20 |
| Visual inspection property | | - | × | × | ○ |
| Recognizability of foreign matters | | - | ○ | × | ○ |
| Releasing property | | × | ○ | ○ | ○ |
| Flatness | | ○ | ○ | ○ | × |
| Total evaluation | | × | × | × | × |

The film obtained in Comparative Example 1a suffered from a number of flaws and therefore was incapable of evaluating a visual inspection property and a foreign matter recognizability thereof.

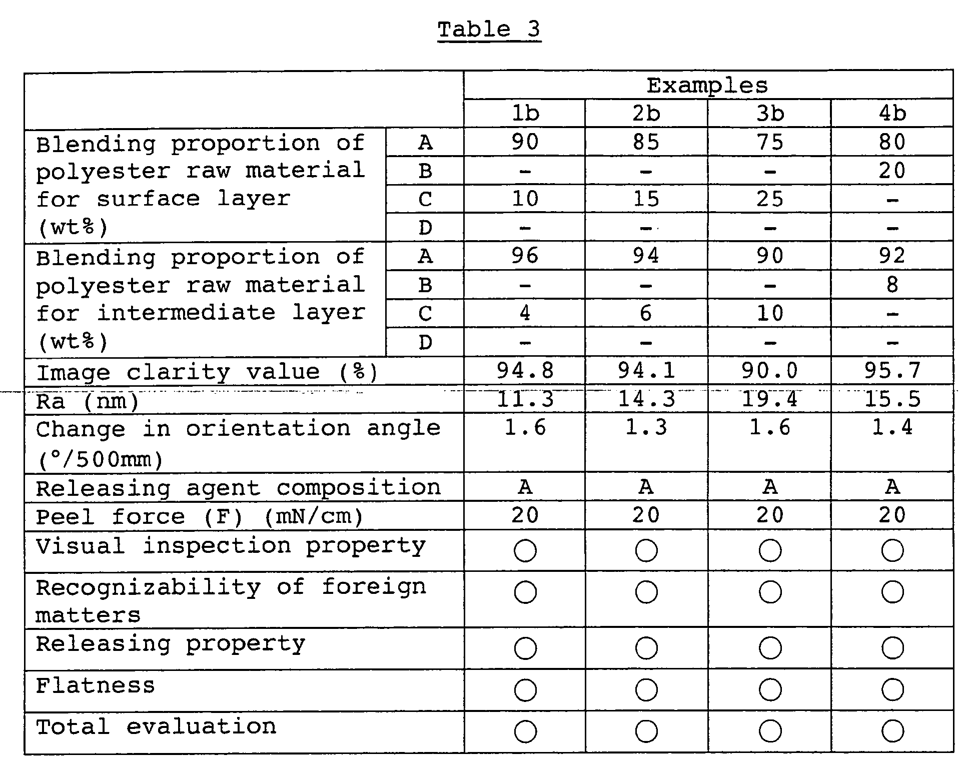

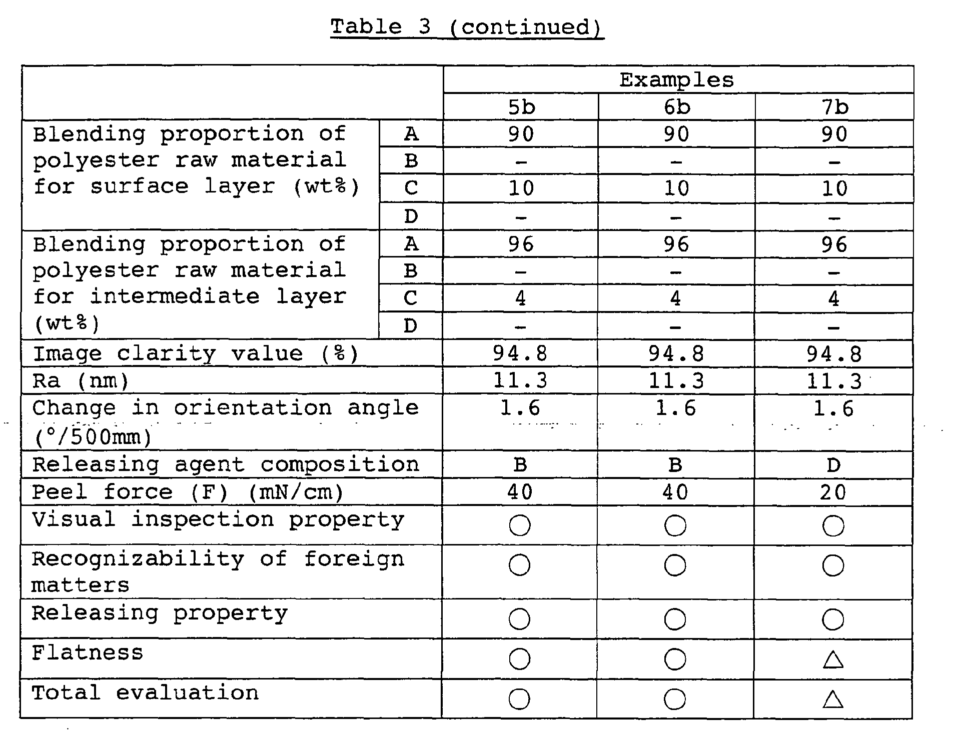

**Table 4**

| | | Comparative Examples | | | |
|---|---|---|---|---|---|
| | | 1b | 2b | 3b | 4b |
| Blending proportion of polyester raw material for surface layer (wt%) | A | 92 | 60 | 75 | 90 |
| | B | - | 40 | - | - |
| | C | 8 | - | - | 10 |
| | D | - | - | 25 | - |
| Blending proportion of polyester raw material for intermediate layer (wt%) | A | 97 | 84 | 95 | 96 |
| | B | - | 16 | - | - |
| | C | 3 | - | - | 4 |
| | D | - | - | 5 | - |
| clarity value (%) | | 95.5 | 90.4 | 84.5 | 94.8 |
| Image Ra (nm) | | 9.1 | 27.3 | 20.9 | 11.3 |
| Change in orientation angle (°/500mm) | | 1.4 | 1.3 | 1.5 | 1.6 |
| Releasing agent composition | | - | A | A | C |
| Peel force (F) (mN/cm) | | - | 20 | 20 | 250 |
| Visual inspection property | | - | × | ○ | ○ |
| Recognizability of foreign matters | | - | ○ | × | ○ |
| Releasing property | | × | ○ | ○ | × |
| Flatness | | ○ | ○ | ○ | ○ |
| Total evaluation | | × | × | × | × |

The film obtained in Comparative Example 1b suffered from a number of flaws and therefore was incapable of evaluating a visual inspection property and a foreign matter recognizability thereof.

### INDUSTRIAL APPLICABILITY

The film of the present invention is capable of realizing a high inspection accuracy of a polarizing plate when subjected to various inspection methods, and therefore can be suitably used as a a release film for a polarizing plate.

## Claims

1. A release film for a polarizing plate which comprises polyester film and a release layer formed on one surface of the polyester film by a coating/stretching method, has a haze of 7 to 18%, and has an L value of not more than 77 as measured form a side of the release layer by a reflection method.

2. A release film for a polarizing plate, which comprises a polyester film and a release layer formed on one surface of the polyester film by a coating/stretching method, has a surface roughness (Ra) of 11 to 25 nm, and has an image clarity value of not less than 90%.
